(19) Europäisches Patentamt
European Patent Office
Office européen des brevets

(11) Veröffentlichungsnummer: **0 225 529 A2**

(12) **EUROPÄISCHE PATENTANMELDUNG**

(21) Anmeldenummer: 86116188.3

(22) Anmeldetag: 22.11.86

(51) Int. Cl.[4]: **C08G 73/14**, C08J 5/18, C08G 69/44

(30) Priorität: 04.12.85 DE 3542798

(43) Veröffentlichungstag der Anmeldung: 16.06.87 Patentblatt 87/25

(84) Benannte Vertragsstaaten: AT BE CH DE FR GB IT LI LU NL SE

(71) Anmelder: **BASF Aktiengesellschaft**
Carl-Bosch-Strasse 38
D-6700 Ludwigshafen(DE)

(72) Erfinder: **Hisgen, Bernd, Dr.**
Goethestrasse 6
D-6703 Limburgerhof(DE)
Erfinder: **Kock, Hans-Jakob, Dr.**
Benckiserstrasse 63
D-6700 Ludwigshafen(DE)

# (54) Vollaromatische mesomorphe Polyesteramidimide, deren Herstellung und Verwendung.

(57) Vollaromatische mesomorphe Polyesteramidimide, die unterhalb 320°C eine flüssigkristalline fadenbildende Schmelze bilden, aufgebaut aus

a) 5 bis 35 Mol.% wiederkehrenden Einheiten der Formel I und/oder II

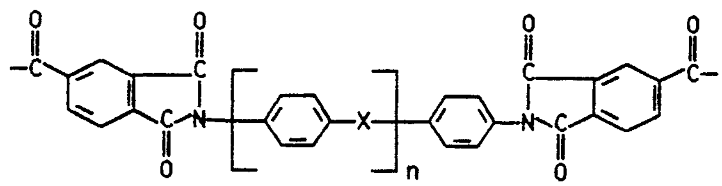

I .

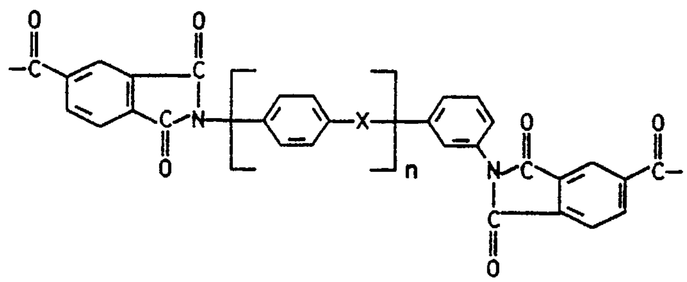

II

in denen X gleich oder verschieden sein kann und jeweils für -O-, -S-, $-SO_2-$, -CO-, $-CH_2-$oder $=C(CH_3)_2$ steht und n 0 oder 1 bezeichnet,

b) 0 bis 30 Mol.% wiederkehrenden Einheiten der Formeln III und/oder IV

EP 0 225 529 A2

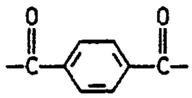

III

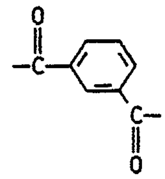

IV

c) einer der Summe der Komponenten a und b entsprechenden molaren Menge mindestens einer der wiederkehrenden Einheiten V, VI, VII, VIII, IX oder X in Mengen von

c1) 3 bis 35 Mol.% Einheiten der Formel V

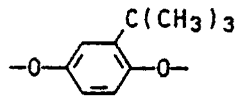

V

c2) 0 bis 10 Mol.% Einheiten der Formel VI

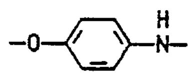

VI

c3) 2 bis 25 Mol.% Einheiten der Formel VII

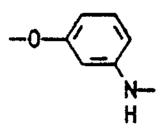

VII

c4) 2 bis 20 Mol.% Einheiten der Formel VIII

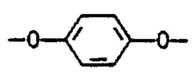

VIII

c5) 0 bis 20 Mol.% der Einheiten der Formel IX

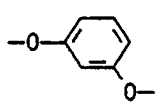

IX

c6) 2 bis 20 Mol.% Einheiten der Formel X

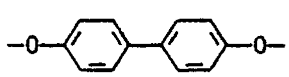

X

wobei jeweils die Summe der molaren Anteile der Komponenten c1) bis c6), die Summe der molaren Anteile aus den Komponenten a) und b) ergibt.

d) mindestens 10 Mol.% wiederkehrenden Einheiten der Formel XI

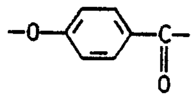

XI

e) 0 bis 25 Mol.% mindestens einer der wiederkehrenden Einheiten der Formel XII, XIII oder XIV

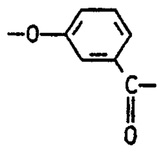

XII

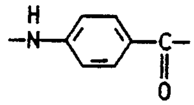

XIII

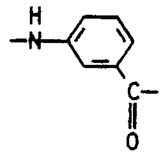

XIV

wobei die Summe der molaren Anteile der Komponenten a), b), c), d) und e) jeweils 100 Mol.% ergibt, deren Herstellung und Verwendung.

## Vollaromatische mesomorphe Polyesteramidimide, deren Herstellung und Verwendung

Gegenstand der Erfindung sind vollaromatische mesomorphe Polyesteramidimide, die unterhalb 320°C eine flüssigkristalline fadenbildende Schmelze bilden.

Aus der US-PS 43 83 105 sind Polyesteramide bekannt, die aus Hydroxinaphthalincarbonsäure, 4-Hydroxibenzoesäure sowie 4-Carboxy-N-(p-Hydroxiphenyl)phthalimid aufgebaut sind. Solche Polyesterimide bedürfen jedoch Verarbeitungstemperaturen von über 320°C. Auch die aus der US-PS 41 76 223 bekannten Polyesterimide, die sich von 4-(4-Hydroxiphthalimido)-phenol, Terephthalsäure und Naphthalindicarbonsäure sowie gegebenenfalls substituierten Hydrochinonen ableiten, bedürfen bei der Verarbeitung Temperaturen über 320°C. Zudem sind disubstiuierte Naphthalinkomponenten wenig wohlfeile Ausgangsstoffe. In der US-PS 4 330 457 werden Polyesteramide aufgebaut aus Hydroxinaphthalincarbonsäure, Terephthalsäure, Hydrochinon und p-Aminophenol beschrieben. Solche Polyesteramide haben jedoch eine Glasübergangstemperatur von etwa 105°C und somit keine ausreichende Wärmeformeständigkeit.

Es war deshalb die technische Aufgabe gestellt, vollaromatische mesomorphe Polyesteramidimide zur Verfügung zu stellen, die unterhalb 320°C aus der Schmelze verarbeitbar sind, eine hohe Wärmeformbeständigkeit aufweisen und sich durch eine glatte abriebfeste Oberfläche auszeichnen.

Diese Aufgabe wird gelöst durch vollaromatische mesomorphe Polyesteramidimide, die bei einer Temperatur unterhalb 320°C eine flüssigkristalline fadenbildende Schmelze bilden, aufgebaut aus

a) 5 bis 35 Mol.% wiederkehrenden Einheiten der Formel I und/oder II

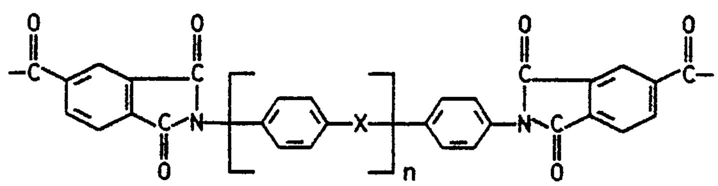

I

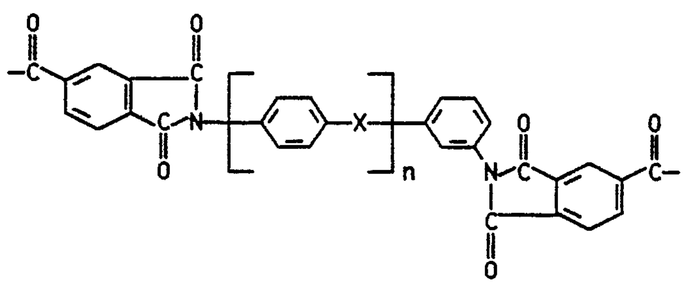

II

in der X gleich oder verschieden sein kann und jeweils für -O-, -S-, $-SO_2-$, -CO-, $-CH_2-$oder $=C(CH_3)_2$ steht und n 0 oder 1 bezeichnet.

b) 0 bis 30 Mol.% wiederkehrenden Einheiten der Formeln III und/oder IV

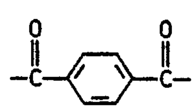

III

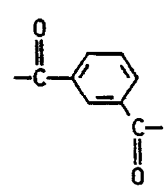

IV

c) einer der Summe der Komponenten A und B entsprechenden molaren Menge mindestens einer der wiederkehrenden Einheiten V, VI, VII, VIII, IX oder X in einer Menge von

c1) 3 bis 35 Mol.% Einheiten der Formel V

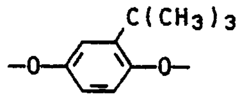

V

c2) 0 bis 10 Mol.% Einheiten der Formel VI

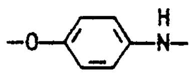

VI

c3) 2 bis 25 Mol.% Einheiten der Formel VII

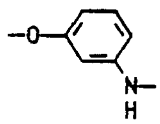

VII

c4) 2 bis 20 Mol.% Einheiten der Formel VIII

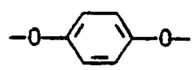

VIII

c5) 0 bis 20 Mol.% Einheiten der Formel IX

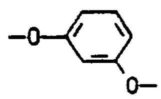

IX

c6) 2 bis 20 Mol.% Einheiten der Formel X

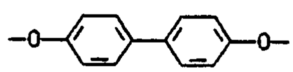

X

wobei die Summe der Molprozente der Komponenten c1) bis c6) jeweils die Summe der Molprozente der Komponenten A und B ergibt.

d) mindestens 10 Mol.% wiederkehrenden Einheiten der Formel XI

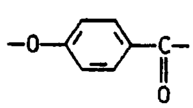

XI

e) 0 bis 25 Mol.% mindestens einer der wiederkehrenden Einheiten der Formel XII, XIII oder XIV

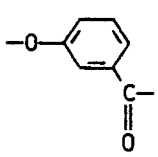

XII

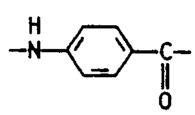

XIII

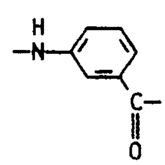

XIV

wobei die Summe der Molprozente der Komponenten a), b), c), d) und e) jeweils 100 Mol.% ergibt.

Die neuen vollaromatischen Polyesteramidimide haben den Vorteil, eine hohe Wärmeformbeständigkeit mit einer glatten Oberfläche zu verbinden. Weiterhin zeichnen sich die neuen Polyesteramidimide durch hohe Steifigkeit, Festigkeit und Zähigkeit aus. Zudem sind die neuen Polyesteramidimide weitgehend chemikalienbeständig und schwer brennbar. Schließlich lassen sich die neuen Polyesteramidimide bei Temperaturen unterhalb 320°C aus der Schmelze verarbeiten.

Der flüssigkristalline Zustand der Polyesteramidimide kann mit dem Polarisationsmikroskop nach einer in der DE-AS 25 20 819 beschriebenen Methode nachgewiesen werden. Zwischen gekreuzten Polarisatoren weisen die Polymerschmelzen, die in einer Schichtdicke von 10 µm zwischen Glasplatten aufgetragen sind, Texturen auf, die einer mesomorphen Phase zugeordnet werden können.

Die erfindungsgemäßen Polyesteramidimide sind aufgebaut aus

a) 5 bis 35 Mol.%, insbesondere 7 bis 25 Mol.% wiederkehrenden Einheiten der Formeln I und/oder II, wobei X gleich oder verschieden sein kann und jeweils für -O-, -S-, $-SO_2-$, -CO-, $-CH_2-$oder $=C(CH_3)_2$, vorzugsweise für -O-, $-SO_2-$oder $-CH_2-$steht und n 0 oder 1, insbesondere 1, bezeichnet. Geeignete Ausgangsverbindungen sind beispielsweise 4,4'-Bis-[(4-carboxi)-N-phthalimido]diphenylether, 4,4'-Bis-[(4-carboxi)-N-phthalimido]diphenylmethan, 4,4'-Bis-[(4-carboxi)-N-phthalimido]diphenylsulfon, 4,4'-Bis-[(4-carboxi)-N-phthalimido]diphenylsulfid, 4,4'-Bis-[(4-carboxi)-N-phthalimido]diphenylketon für Einheiten der Formel I. Für Einheiten der Formel II sind vorteilhafte Ausgangsverbindungen 3,4'-Bis-[(4-carboxi)-N-phthalimido]diphenylether, 3,4'-Bis-[(4-carboxi)-N-phthalimido]diphenylsulfid, 3,4'-Bis-[(4-carboxi)-N-phthalimido]diphenylsulfon, 3,4'-Bis-[(4-carboxi)-N-phthalimido]diphenylketon, 3,4'-Bis-[(4-carboxi)-N-phthalimido]diphenylmethan.

b) 0 bis 30 Mol.%, insbesondere 0 bis 20 Mol.% wiederkehrenden Einheiten der Formeln III und/oder IV. Vorteilhafte Ausgangsstoffe sind Einheiten der Formel III Terephthalsäure und für Einheiten der Formel IV Isophthalsäure.

c) einer Summe der Komponenten a) und b) entsprechenden molaren Menge mindestens einer der wiederkehrenden Einheiten V, VI, VII, VIII, IX oder X, mit der Maßgabe, daß die genannten Einheiten in folgenden molaren Mengen vorliegen:

c1) 3 bis 35 Mol.% Einheiten der Formel V
c2) 0 bis 10 Mol.% Einheiten der Formel VI
c3) 2 bis 25 Mol.% wiederkehrende Einheiten der Formel VII
c4) 2 bis 20 Mol.% wiederkehrende Einheiten der Formel VIII
c5) 0 bis 20 Mol.% wiederkehrende Einheiten der Formel IX
c6) 2 bis 20 Mol.% wiederkehrende Einheiten der Formel X.

Es versteht sich, daß die in den Polyesteramidimiden enthaltenen molaren Anteile der Komponenten c1) bis c6) jeweils dem molaren Anteil aus der Summe der Komponenten a) und b) entspricht.

Vorteilhafte Ausgangsstoffe sind
für Einheiten der Formel V t-Butylhydrochinon,
für Einheiten der Formel VI 4-Aminophenol,
für Einheiten der Formel VII 3-Aminophenol,
für Einheiten der Formel VIII Hydrochinon,
für Einheiten der Formel IX Resorcin,
für Einheiten der Formel X 4,4'-Dihydroxibiphenyl.

d) mindestens 10 Mol.%, insbesondere mindestens 20 Mol.% wiederkehrenden Einheiten der Formel XI. Eine vorteilhafte Ausgangsverbindung ist p-Hydroxibenzoesäure.

e) 0 bis 25 Mol.%, insbesondere 0 bis 20 Mol.% mindestens einer der wiederkehrenden Einheiten XII, XIII oder XIV. Vorteilhafte Ausgangsstoffe sind
für Einheiten der Formel XII n-Hydroxibenzoesäure,
für Einheiten der Formel XIII p-Aminobenzoesäure,
für Einheiten der Formel XIV m-Aminobenzoesäure.

Es versteht sich, daß sich die molaren Anteile der Komponenten a), b), c) und d) jeweils auf 100 Mol.% ergänzen.

Bevorzugte Polyesteramidimide enthalten als Komponente c) 5 bis 25 Mol.% wiederkehrende Einheiten der Formel V, 2 bis 8 Mol.% wiederkehrende Einheiten der Formel VI, 5 bis 20 Mol.% wiederkehrende Einheiten der Formel VI und/oder 5 bis 20 Mol.% mindestens einer der wiederkehrenden Einheiten der Formel VIII, IX oder X.

Besonders bevorzugte Polyesteramidimide enthalten als Komponente c) 5 bis 20 Mol.% wiederkehrende Einheiten der Formel V, 5 bis 15 Mol.% wiederkehrende Einheiten der Formel VII und 5 bis 16 Mol.% wiederkehrende Einheiten der Formel VIII und/oder X.

Bevorzugte vollaromatische Polyesteramidimide nach der Erfindung haben eine Glastemperatur Tg von ≥140°C, insbesondere ≥150°C. Die Glastemperatur wird gemessen werden mit der DSC-Methode, wie sie beschrieben ist in Makromol. Chem. 127 (1969), Seiten 1 ff. Die vollaromatischen flüssigkristallinen Polyesteramidimide gemäß der Erfindung bilden bei einer Temperatur <320°C eine flüssigkristalline fadenbildende Schmelze. Bevorzugt sind auch flüssigkristalline aromatische Polyesteramidimide, die bei einer Temperatur >200°C und <300°C Teilkristallinität aufweisen.

Die erfindungsgemäßen flüssigkristallinen Polyesteramidimide lassen sich erhalten analog nach Techniken, wie sie beispielsweise in der US-PS 4 375 530 und US-PS 41 18 372 beschrieben werden.

Nach einer vorteilhaften Arbeitsweise erhält man die erfindungsgemäßen Polyesteramidimide in einem Einstufenverfahren, bei dem man die nicht derivatisierten Ausgangsverbindungen unter Verwendung von Anhydriden niederer Fettsäuren, z.B. Fettsäuren mit 2 bis 4 Kohlenstoffatomen, insbesondere Essigsäureanhydrid umsetzt. Es ist möglich, hierbei Katalysatoren wie sie aus der EP-Anmeldung 131 846 bekannt sind, in üblichen Mengen mitzuverwenden. Bei der Umsetzung werden die nicht derivatisierten Ausgangsstoffe zusammen mit Fettsäureanhydrid, vorteilhaft in einem mindestens 5 %igen molaren Überschuß, bezogen auf die vorhandenen Hydroxi-und Aminogruppen unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden, vorzugsweise bis zu 2 Stunden auf 130 bis 200°C. Anschließend wird die Temperatur, z.B. innerhalb von 2 bis 2 1/2 Stunden auf 250 bis 350°C gesteigert. Hierbei werden überschüssige Fettsäureanhydride und Fettsäuren abdestilliert. Um die Reaktion zu vervollständigen, hat es sich als vorteilhaft erwiesen, gegen Ende der Umsetzung verminderten Druck, z.B. von 200 bis 0,1 mbar anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter, als durch die Vielzahl chemisch unterschiedlicher Hydroxi-und Aminogruppen eine Abstufung der Reaktivitäten und damit ein mangelhafter polymerer Aufbau zu erwarten wäre.

Die so erhaltenen vollaromatischen flüssigkristallinen Polyesteramidimide werden vorteilhaft in festem Zustand, z.B. bei Temperaturen von 150 bis 250°C bis zur gewünschten Viskosität weiterkondensiert. Diese Nachkondensation in fester Phase kann sowohl vor als auch nach einer thermoplastischen Verarbeitung erfolgen. Die Festphasenkondensation führt man vorteilhaft in Inertgasatmosphäre, z.B. unter Stickstoff durch.

Den Polyesteramidimiden können übliche Zusatz-und Hilfsstoffe in wirksamen Mengen zugesetzt werden. Übliche Zusatz-und Hilfsstoffe sind Stabilisatoren, Oxidationsverzögerer, Mittel gegen Wärmezersetzung und Zersetzung durch ultraviolettes Licht, Gleit-und Entformungsmittel, Färbemittel wie Farbstoffe oder Pigmente, faser-oder pulverförmige Füll-und Verstärkungsmittel, Keimbildungsmittel oder Weichmacher.

Stabilisatoren können den Polymeren in jedem Stadium der Herstellung oder den fertigen Polymeren zugesetzt werden. Vorzugsweise werden die Sta bilisatoren zu einem frühen Zeitpunkt zugesetzt, um zu verhindern, daß die Zersetzung bereits beginnt, bevor die Polymeren geschützt werden können.

Geeignete Oxidationsverzögerer und Wärmestabilisatoren sind beispielsweise Halogenide von Metallen der Gruppe I des periodischen Systems, z.B. Natrium-, Kalium-oder Lithiumhalogenide mit Kupfer-I-halogeniden, z.B. wie Chloriden, Bromiden, Iodiden, ferner sterisch gehinderte Phenole, Hydrochinone, verschiedene substituierte Vertreter dieser Gruppen in Kombinationen der selben in Konzentrationen bis zu 1 Gew.%, bezogen auf das Polymere.

Geeignete UV-Stabilisatoren sind beispielsweise substituierte Resorcine, Salicylate, Benzotriazole oder Benzophenone und dergleichen sowie Mischungen derselben. Solche UV-Stabilisatoren werden in der Regel in Mengen bis zu 2 Gew.% auf das Polymere angewandt.

Geeignete Hilfsstoffe sind auch Farbstoffe, die im allgemeinen in Mengen bis zu 5 Gew.% angewandt werden, wie Nigrosin, Pigmente, wie Titandioxid, Kadmiumsulfid, Kadmiumsulfid-selenid, Phthalocyanine, Ultramarinblau oder Ruß.

Geeignete faser-oder pulverförmige Füllstoffe und Verstärkungsmittel, die in Mengen, bis zu 70 Gew.% auf das Polymere angewandt werden, sind beispielsweise Kohlenstoffasern, Glasfasern, amorphe Kieselsäure, Asbest, Kalziumsilikat, Aluminiumsilikat, Magnesiumcarbonat, Kaolin, Kreide, gepulverter Quarz, Glimmer oder Feldspat.

Geeignete Keimbildungsmittel sind beispielsweise Talkum, Kalziumfluorid, Natriumphenylphosphinat, Aluminiumoxid oder feinteiliges Polytetrafluorethylen.

Schließlich sind geeignete Zusatzstoffe Weichmacher in Mengen, z.B. bis zu 20 Gew.%, wie Phthalsäuredioctylester, Phthalsäuredibenzylester, Phthalsäurebutylbenzylester, Kohlenwasserstofföle, N-n-Butylbenzolsulfonamid, o-und p-Toluolethylsulfonamid.

Die erfindungsgemäßen vollaromatischen flüssigkristallinen Polyesteramidimide eignen sich zur Herstellung von Fäden, Fasern, Folien, Schäumen und technischen Formteilen durch Spritzguß, Pressen oder Extrusion. Die aus den erfindungsgemäßen Polyesteramidimiden hergestellten Formteile zeichnen sich aus durch hervorragende mechanische Eigenschaften wie Steifigkeit, Festigkeit und Zähigkeit. Sie sind außerordentlich chemikalienresistent und flammwidrig. Zudem besitzen sie eine hohe Wärmeformbeständig keit und eine glatte, abriebfeste Oberfläche. Die erfindungsgemäßen Polyesteramidimide eignen sich daher hervorragend zur Herstellung von Formteilen für die Elektro-und Datentechnik, den Fahrzeugbau und andere technische Bereiche. Sie können aber auch als Überzugs-und Beschichtungsmittel, pulverförmig dispergiert, oder als Film verwendet werden.

Die Erfindung sei an folgenden Beispielen veranschaulicht.

Beispiel 1

0,085 mol Terephthalsäure, 0,22 mol 4-Hydroxibenzoesäure, 0,0595 mol tert.-Butylhydrochinon, 0,0595 mol Hydrochinon, 0,051 Mol 3-Aminophenol, 0,085 mol der Verbindung

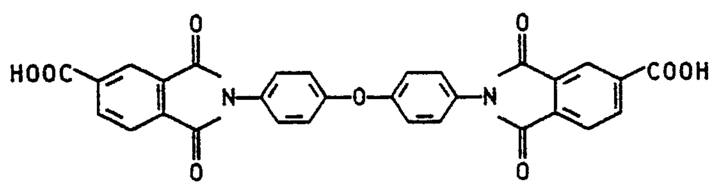

und 134 ml Acetanhydrid werden unter Stickstoffatmosphäre und Rühren innerhalb von 2 h 50 min von 150°C auf 300°C erhitzt. Dabei wird überschüssiges Acetanhydrid und Essigsäure abdestilliert. Anschließend wird innerhalb 20 min der Druck auf 45 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 165°C. Die inhärente Viskosität beträgt 0,69 dl/g, gemessen in 0,1 %iger (Gew/Vol) Lösung in Pentafluorphenol bei 60°C.

Beispiel 2

0,07 mol Terephthalsäure, 0,28 mol 4-Hydroxibenzoesäure, 0,07 mol t-Butylhydrochinon, 0,07 mol 3-Aminophenol und 0,07 Mol der Verbindung

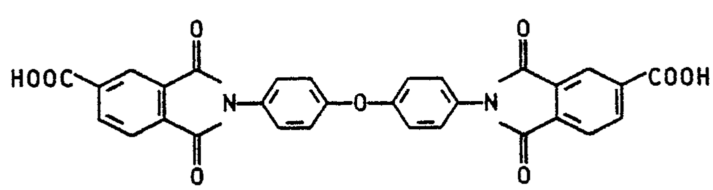

und 114 ml Acetanhydrid werden unter Stickstoffatmosphäre und Rühren innerhalb von 2 h 50 min von 150°C auf 300°C erhitzt. Dabei wird über schüssiges Acetanhydrid und Essigsäure abdestilliert. Anschließend wird innerhalb 20 min der Druck auf 100 mbar reduziert. Man erhält eine viskose, fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 173°C. Die inhärente Viskosität beträgt 2,94 dl/g, gemessen in 0,1 %iger (Gew/Vol) Lösung in Pentafluorphenol bei 60°C.

## Ansprüche

1. Vollaromatische mesomorphe Polyesteramidimide, die unterhalb 320°C eine flüssigkristalline fadenbildende Schmelze bilden, aufgebaut aus

a) 5 bis 35 Mol.% wiederkehrenden Einheiten der Formel I und/oder II

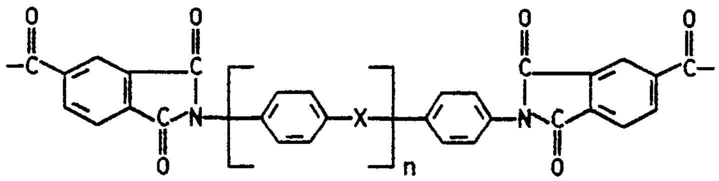

I

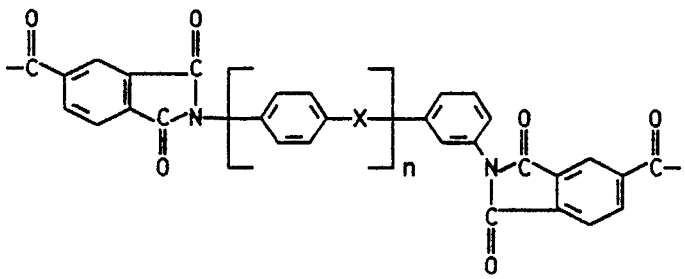

II

in denen X gleich oder verschieden sein kann und jeweils für -O-, -S-, $-SO_2-$, -CO-, $-CH_2-$oder $=C(CH_3)_2$ steht und n 0 oder 1 bezeichnet,

b) 0 bis 30 Mol.% wiederkehrenden Einheiten der Formeln III und/oder IV

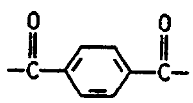

III

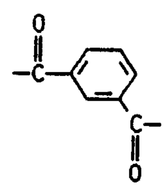

IV

c) einer der Summe der Komponenten A und B entsprechenden molaren Menge mindestens einer der wiederkehrenden Einheiten V, VI, VII, VIII, IX oder X in Mengen von

c1) 3 bis 35 Mol.% Einheiten der Formel V

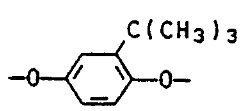

V

c2) 0 bis 10 Mol.% Einheiten der Formel VI

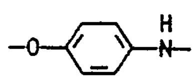

VI

c3) 2 bis 25 Mol.% Einheiten der Formel VII

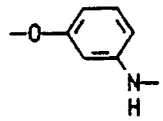

VII

c4) 2 bis 20 Mol.% Einheiten der Formel VIII

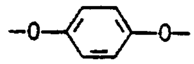

VIII

c5) 0 bis 20 Mol.% der Einheiten der Formel IX

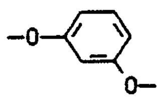

IX

c6) 2 bis 20 Mol.% Einheiten der Formel X

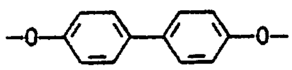

X

wobei jeweils die Summe der molaren Anteile der Komponenten c1) bis c6), die Summe der molaren Anteile aus den Komponenten a) und b) ergibt.

d) mindestens 10 Mol.% wiederkehrenden Einheiten der Formel XI

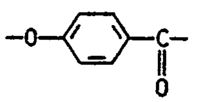

XI

e) 0 bis 25 Mol.% mindestens einer der wiederkehrenden Einheiten der Formel XII, XIII oder XIV

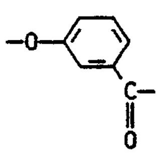 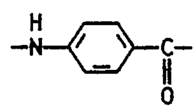 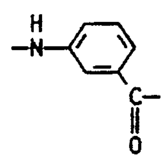

XII XIII XIV

wobei die Summe der molaren Anteile der Komponenten a), b), c), d) und e) jeweils 100 Mol.% ergibt.

2. Vollaromatische mesomorphe Polyesteramidimide nach Anspruch 1, dadurch gekennzeichnet, daß sie aufgebaut sind aus

a) 7 bis 25 Mol.% wiederkehrenden Einheiten der Formeln I und/oder II

b) 0 bis 20 Mol.% wiederkehrenden Einheiten der Formeln III und/oder IV

c) einer der Summe der Komponenten a) und b) entsprechenden molaren Menge an mindestens einer der wiederkehrenden Einheiten der Formeln V, VI, VII, VIII, IX oder X

d) mindestens 10 Mol.% wiederkehrenden Einheiten der Formeln XI

e) 0 bis 20 Mol.% mindestens einer wiederkehrenden Einheiten der Formel XII, XIII oder XIV.

3. Vollaromatische mesomorphe Polyesteramidimide nach den Ansprüchen 1 und 2, dadurch gekennzeichnet, daß sie als Komponente c) 5 bis 25 Mol.% Einheiten der Formel V, 2 bis 8 Mol.% Einheiten der Formel VI, 5 bis 20 Mol.% Einheiten der Formeln VII und/oder 5 bis 20 Mol.% mindestens einer der Einheiten VIII, IX oder X enthalten.

4. Vollaromatische mesomorphe Polyesteramidimide nach den Ansprüchen 1 und 2, <u>dadurch gekennzeichnet</u> , daß sie als Komponente c) 5 bis 20 Mol.% Einheiten der Formel V, 5 bis 15 Mol.% Einheiten der Formel VII und 5 bis 16 Mol.% Einheiten der Formel VIII und/oder X enthalten.

5. Vollaromatische mesomorphe Polyesteramidimide nach den Ansprüchen 1 bis 4, <u>dadurch gekennzeichnet</u> , daß sie eine Glasübergangstemperatur Tg $\geq$140°C haben.

6. Verfahren zur Herstellung von vollaromatischen mesomorphen Polyesteramidimiden nach den Ansprüchen 1 bis 5, <u>dadurch gekennzeichnet</u> , daß man die Monomeren in Form der underivatisierten Hydroxi-Amino-bzw. -Carboxy-Verbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach Anspruch 8, <u>dadurch gekennzeichnet</u>, daß man die vollaromatischen Polyesteramidimide nach der Kondensation in der Schmelze durch Kondensation in fester Phase bei einer Temperatur von 150 bis 250°C nachkondensiert.

8. Verwendung von vollaromatischen, mesomorphen Polyesteramiden nach den Ansprüchen 1 bis 7 zur Herstellung von Fäden, Fasern, Folien und Formteilen.

Patentansprüche für folgenden Vertragsstaat : AT

1. Verfahren zur Herstellung von vollaromatischen mesomorphen Polyesteramidimiden, die unterhalb 320°C eine flüssigkristalline fadenbildende Schmelze bilden, aufgebaut aus

a) 5 bis 35 Mol.% wiederkehrenden Einheiten der Formel I und/oder II

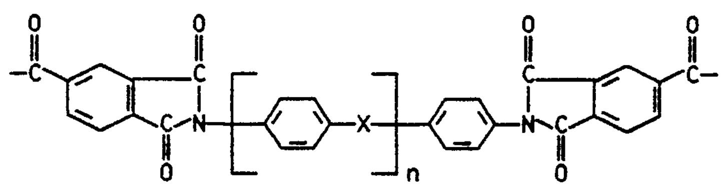
I

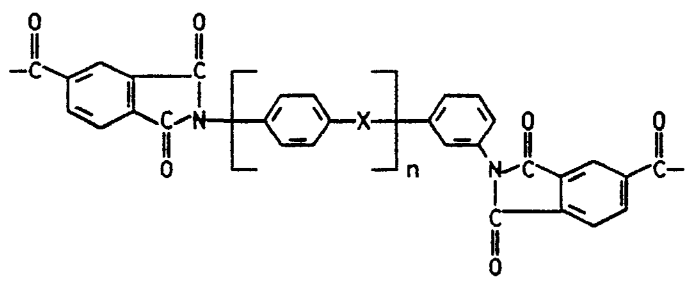
II

in denen X gleich oder verschieden sein kann und jeweils für -O-, -S-, $-SO_2-$, -CO-, $-CH_2-$oder $=C(CH_3)_2$ steht und n 0 oder 1 bezeichnet,

b) 0 bis 30 Mol.% wiederkehrenden Einheiten der Formeln III und/oder IV

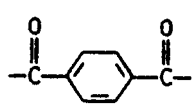
III

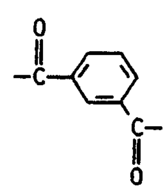
IV

c) einer der Summe der Komponenten A und B entsprechenden molaren Menge mindestens einer der wiederkehrenden Einheiten V, VI, VII, VIII, IX oder X in Mengen von

c1) 3 bis 35 Mol.% Einheiten der Formel V

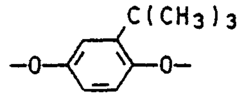

V

c2) 0 bis 10 Mol.% Einheiten der Formel VI

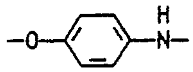

VI

c3) 2 bis 25 Mol.% Einheiten der Formel VII

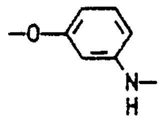

VII

c4) 2 bis 20 Mol.% Einheiten der Formel VIII

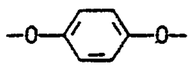

VIII

c5) 0 bis 20 Mol.% der Einheiten der Formel IX

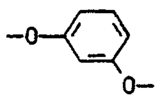

IX

c6) 2 bis 20 Mol.% Einheiten der Formel X

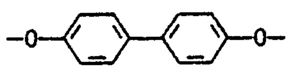

X

wobei jeweils die Summe der molaren Anteile der Komponenten c1) bis c6), die Summe der molaren Anteile aus den Komponenten a) und b) ergibt.

d) mindestens 10 Mol.% wiederkehrenden Einheiten der Formel XI

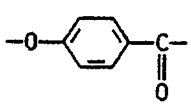

XI

e) 0 bis 25 Mol.% mindestens einer der wiederkehrenden Einheiten der Formel XII, XIII oder XIV

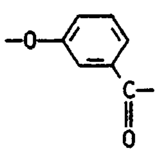

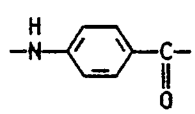

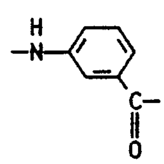

XII XIII XIV

wobei die Summe der molaren Anteile der Komponenten a), b), c), d) und e) jeweils 100 Mol.% ergibt, durch Umsetzen der den Einheiten I bis XIV entsprechenden Hydroxy-, Amino-und Carboxyverbindungen oder deren Ester bildenden Derivate.

2. Verfahren nach Anspruch 1, dadurch gekennzeichnet, daß die vollaromatischen mesomorphen Polyesteramidimide aufgebaut sind aus

a) 7 bis 25 Mol.% wiederkehrenden Einheiten der Formeln I und/oder II

b) 0 bis 20 Mol.% wiederkehrenden Einheiten der Formeln III und/oder IV

c) einer der Summe der Komponenten a) und b) entsprechenden molaren Menge an mindestens einer der wiederkehrenden Einheiten der Formeln V, VI, VII, VIII, IX oder X

d) mindestens 10 Mol.% wiederkehrenden Einheiten der Formeln XI

e) 0 bis 20 Mol.% mindestens einer wiederkehrenden Einheiten der Formel XII, XIII oder XIV.

3. Verfahren nach den Ansprüchen 1 und 2, dadurch gekennzeichnet, daß die vollaromatischen mesomorphen Polyesteramidimide als Komponente c) 5 bis 25 Mol.% Einheiten der Formel V, 2 bis 8 Mol.% Einheiten der Formel VI, 5 bis 20 Mol.% Einheiten der Formeln VII und/oder 5 bis 20 Mol.% mindestens einer der Einheiten VIII, IX oder X enthalten.

4. Verfahren nach den Ansprüchen 1 und 2, dadurch gekennzeichnet, daß die vollaromatischen mesomorphen Polyesteramidimide als Komponente c) 5 bis 20 Mol.% Einheiten der Formel V, 5 bis 15 Mol.% Einheiten der Formel VII und 5 bis 16 Mol.% Einheiten der Formel VIII und/oder X enthalten.

5. Verfahren nach den Ansprüchen 1 bis 4, dadurch gekennzeichnet, daß die vollaromatischen mesomorphen Polyesteramidimide eine Glasübergangstemperatur Tg ≥140°C haben.

6. Verfahren nach den Ansprüchen 1 bis 5, dadurch gekennzeichnet, daß man die Monomeren in Form der underivatisierten Hydroxi-Amino-bzw. -Carboxy-Verbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach den Ansprüchen 1 bis 8, dadurch gekennzeichnet, daß man die vollaromatischen Polyesteramidimide nach der Kondensation in der Schmelze durch Kondensation in fester Phase bei einer Temperatur von 150 bis 250°C nachkondensiert.

8. Verwendung von vollaromatischen, mesomorphen Polyesteramiden nach den Ansprüchen 1 bis 7 zur Herstellung von Fäden, Fasern, Folien und Formteilen.